# EUROPEAN PATENT APPLICATION

(11) **EP 4 129 712 A1**
(43) Date of publication of application: **08.02.2023**
(21) Application number: 21189622.0
(22) Date of filing: 04.08.2021
(51) Int. Cl.: B60B 3/14, B60B 3/16

(54) **LOCKING ASSEMBLY FOR SECURING A WHEEL RIM TO A WHEEL HUB OF A VEHICLE, WHEEL ATTACHMENT SYSTEM, AND METHOD FOR ATTACHING A WHEEL RIM TO A WHEEL HUB OF A VEHICLE**

(71) Applicant: ILJIN Bearing GmbH, 97424 Schweinfurt (DE)
(72) Inventor: Sziedat, Marcus, 97437 Hassfurt (DE); Mahr, Reinhold, 97491 Aidhausen (DE); Oh, Moontaek, Seoul (KR)
(74) Representative: BCKIP Part mbB

(57) **Abstract**

A locking assembly (100) for securing a wheel rim (300) to a wheel hub (200) of a vehicle includes a locking screw (1) including a sleeve body (10) that has an external thread (11) for engaging with an internal thread (210) of the wheel hub and an internal thread (12), a flange (14) formed at a first end of the sleeve body for abutment against the wheel rim with respect to an axial direction, and a plurality of clamping jaws (16) formed at a second end of the sleeve body and arranged spaced to each other along a circumference of the sleeve body, each jaw being elastically deformable in a radial direction and having a radially inner surface (16a) and a radially outer surface (16b) for contacting a contact surface (216a) of the wheel hub. The assembly further has a safety screw (2) including a shaft (20) that has an external thread (21) for engaging with the internal thread of the sleeve body of the locking screw, and a head (22) provided at a first end (20A) of the shaft, the head having a radially outer surface (22a) for contacting the radially inner surfaces of the jaws. At least one of the radially inner surfaces (16a) of the jaws and the radially outer surface (22a) of the head of the safety screw is conical, so that the jaws are spread outwards in the radial direction, when the shaft of the safety screw with its external thread is screwed into the internal thread of the sleeve body of the locking screw.

## Description

### TECHNICAL FIELD

The present invention relates to a locking assembly for securing a wheel rim to a wheel hub of a vehicle, a wheel attachment system, and a method for attaching a wheel rim to a wheel hub of a vehicle.

### BACKGROUND

A wheel of a vehicle, typically, is attached to a wheel hub by securing a wheel rim to the hub by means of a plurality of screws. Other solutions for attaching the wheel rim to the wheel hub employ a single central locking screw that secures the wheel rim on the hub. In this case, usually, measures are taken to secure the locking screw in a locking position in order to avoid unintended loosening of the locking screw.

For example, US 2013/0020855 A1 discloses a device for securing a wheel nut of a central lock on a wheel hub. The wheel hub is provided with an external thread to which the wheel nut is screwed. The device is designed as a securing cover comprising a shaft with an external thread and a cylindrical flange region extending radially from an end of the shaft. The securing cover, with the external thread of the shaft, can be screwed into the internal thread of the hub so that cylindrical flange region radially overlaps the wheel nut.

### SUMMARY OF THE INVENTION

One of the ideas of the present invention is to provide improved solutions for attaching a wheel rim to a hub, e.g. at one central fixing point.

To this end, present invention provides a locking assembly for securing a wheel rim to a wheel hub of a vehicle in accordance with claim 1, a wheel attachment system in accordance with claim 11, and a method for attaching a wheel rim to a wheel hub of a vehicle in accordance with claim 13.

According to a first aspect of the invention, a locking assembly for securing a wheel rim to a wheel hub of a vehicle comprises a locking screw and a safety screw. The locking screw includes a sleeve body that has an external thread for engaging with an internal thread of the wheel hub and an internal thread, a flange or collar formed at a first end of the sleeve body for abutment against the wheel rim with respect to an axial direction, and a plurality of clamping jaws formed at a second end of the sleeve body and arranged spaced to each other along a circumference of the sleeve body, each jaw being elastically deformable in a radial direction and having a radially inner surface and a radially outer surface for contacting a contact surface of the wheel hub. The safety screw includes a shaft that has an external thread for engaging with the internal thread of the sleeve body of the locking screw, and a head provided at a first end of the shaft, the head having a radially outer surface for contacting the radially inner surfaces of the jaws. At least one of the radially inner surfaces of the jaws and the radially outer surface of the head of the safety screw is conical, so that the jaws are spread outwards in the radial direction, when the shaft of the safety screw with its external thread is screwed into the internal thread of the sleeve body of the locking screw.

According to a second aspect of the invention, a wheel attachment system includes a wheel hub comprising a central hub, which has an outer circumferential surface for receiving a wheel rim thereon and an inner circumferential surface provided with an internal thread, and a collar protruding radially from the outer circumferential surface of the central hub, and a locking assembly according to the first aspect of the invention. The inner circumferential surface of the central hub has a portion arranged distanced to the internal thread that forms a contact surface of the wheel hub. The locking screw, with the external thread of the sleeve body, is screwable or configured to be screwed into the internal thread of the central hub so that the clamping jaws are in frictional contact with the contact surface of the wheel hub. The safety screw, with the external thread of the shaft, is screwable or configured to be screwed into the internal thread of the sleeve body of the locking screw so that the clamping jaws are spread radially outwards against the contact surface of the wheel hub to generate a predefined clamping force between the clamping jaws and the contact surface of the wheel hub.

According to a third aspect of the invention, a method for attaching a wheel rim to a wheel hub of a vehicle is provided. The method, for example, may be carried out by means of the wheel attachment system of the second aspect of the invention. The method includes positioning the wheel rim on an outer circumferential surface of a central hub of the wheel hub such that the central hub protrudes through a receiving opening of the wheel rim. In a further step, a locking screw is screwed into an inner thread provided on an inner surface of the central hub, wherein the wheel rim is clamped between a flange of the locking screw and a collar radially protruding from the outer circumferential surface of the central hub, and wherein a plurality of clamping jaws provided on an axial end of the locking screw come into frictional contact with a contact surface of the wheel hub, said contact surface being formed by a portion of the inner circumferential surface of the central hub distanced to the internal thread. The method further includes screwing a safety screw into an internal thread of the locking screw, wherein a head of the safety screw are moved into contact with radially inner surfaces of the jaws, and the jaws are spread outwards in the radial direction to generate a clamping force between the clamping jaws and the contact surface of the wheel hub.

One of the ideas on which the present invention is based is to secure a locking screw at a wheel hub, on the one hand, by means of engaging an external thread of the locking screw with an internal thread of the wheel hub and, on the other hand, by means of clamping jaws that are radially pushed against an inner circumferential surface of the wheel hub by a head of a safety screw that is screwed into an internal thread of the locking screw. Thereby, a radial clamping force is generated that urges the clamping jaws against the inner circumferential surface or contact surface of the wheel hub. Thereby, at least a friction fit and, preferably, also a form fit between the jaws and the wheel hub is achieved that prevents rotation of the locking screw.

The locking screw has a sleeve body, e.g. a hollow, substantially cylindrical body that defines a screw longitudinal axis. An axial direction is parallel to the screw longitudinal axis. A radial direction extends transverse to the screw longitudinal axis.

The jaws are formed integrally with the sleeve body and positioned at one end of the sleeve bod with respect to the axial direction. For example, each jaw may include a clamping body that includes the radially inner and outer surfaces, and an elastically deformable web that connects the clamping body and the sleeve body. For example, the web may have a smaller thickness in the radial direction than the clamping body. An outer diameter defined by the radially outer surfaces of the clamping jaws may be greater than an inner diameter defined by the contact surface of the wheel hub, so that a preloaded frictional contact occurs already when the locking screw, with its external thread, is screwed into the internal tread of the wheel hub. The safety screw has a shaft with the outer thread and a head. An outer circumferential surface of the head of the safety screw and/or the radially inner surfaces of the jaws may be ramp shaped or conical so that, when the outer circumferential surface of the head of the safety screw and the radially inner surfaces of the jaws are in contact and the head is moved in the axial direction towards an end of the sleeve body opposite of the end where the jaws are formed, the head spreads or moves the jaws outwards in the radial direction.

One of the advantages of the invention is that the jaws provide a very efficient and reliable interlocking between the wheel hub and the locking screw. Since the jaws are radially spreadable by axially moving the safety screw, i.e. by screwing the safety screw into the internal thread of the locking screw, a radially compact solution is provided. Further, the frictional or clamping force between the jaws and the wheel hub generated by the head of the safety screw help to increase self-locking properties of the threaded connection between the wheel hub and the locking screw and the threaded connection between the locking screw and the safety screw.

Advantageous embodiments of the present disclosure are provided in the dependent claims and in the following description, referring to the drawings.

According to some embodiments, an outer diameter defined by the radially outer surfaces of the clamping jaws is greater than an inner diameter defined by the contact surface of the wheel hub. Since the jaws are elastically deformable, the jaws are pre-tensioned against the contact surface even when the safety screw is not engaged with the locking screw.

According to some embodiments, the radially outer surfaces of the clamping jaws and the contact surface of the wheel hub are conical, wherein a greatest outer diameter defined by the radially outer surfaces of the clamping jaws is greater than a smallest inner diameter defined by the contact surface of the wheel hub. Thus, the jaws and the contact surface engage in a form fitting matter with respect to the axial direction when the locking screw is screwed into the internal thread of the central hub, even without the safety screw being introduced. Further, when the safety screw is screwed into the internal thread of the locking screw, the head of the safety screw not only urges the jaws into further contact with the contact surface but also blocks radial movement of the jaws and, thereby, secures the jaws in their form fitting position.

According to some embodiments, the flange of the locking screw includes a tool interface configured to engage with a tool for rotating the locking screw. For example, the tool interface may be provided at an axial end face of the flange that faces away from the sleeve body. Thereby, the radial dimensions of the locking assembly may be further reduced. Further, actuation of the locking screw is eased further.

According to some embodiments, the tool interface includes a plurality of pockets formed at an axial end face of the flange. For example, the pockets may be positioned spaced to each other along a circumference of the flange or collar. In some examples, at least two pockets may be provided. The pockets serve to receive engagement pins of the tool in order to apply a rotational moment to the flange by means of the tool.

According to some embodiments, the external thread and the internal thread of the sleeve body of the locking screw are counter-rotating. Thus, when viewing along the screw longitudinal axis from the side of the flange of the locking screw, both, the locking screw and the safety screw can be rotated in the same direction to move them axially in opposite directions. For example, the locking screw can be rotated clockwise in order to introduce the locking screw into the wheel hub, i.e. the central hub, and the safety screw, when seen from the side of the flange of the locking screw can be rotated clockwise, too, in order to introduce the safety screw into the sleeve body of the locking screw and spread the clamping jaws radially outward. Thus, a simple fixing procedure can be realized. Further, unintended loosening of the safety screw and of the locking screw can be further prevented.

According to some embodiments, the external thread of the sleeve body of the locking screw is a trapezoidal thread.

According to some embodiments, the internal thread of the sleeve body of the locking screw is an ISO metric screw thread.

According to some embodiments, the shaft of the safety screw is formed as a hollow shaft. Optionally, the outer thread of the safety screw is arranged in a predefined axial distance to the head. Thereby, an elastic expansion zone is advantageously formed.

According to some embodiments, the safety screw includes a tool interface configured to engage with a tool for rotating the safety screw, wherein the tool interface is formed at a second end of the shaft. For example, when the shaft of the safety screw is formed as a hollow shaft, the tool interface may comprise engagement structures formed on the inner circumferential surface of the shaft. For example, the inner circumferential surface of the shaft, at the second end, may define a hexagon or another polygonal shape. Hence, the locking screw and the may be actuated from the same side which further eases the assembly process of the locking assembly on the wheel hub.

According to some embodiments, the flange of the locking screw includes a central opening forming a passage into the sleeve body. Thereby, for example, access to the optional tool interface of the safety screw is further eased.

According to some embodiments, the safety screw, with its external thread, is screwable into the internal thread of the sleeve body of the locking screw to a locking position in which the jaws are spread outwards in the radial direction and in which the shaft of the safety screw protrudes into the central opening of the locking screw by a predefined length. For example, the second end of the shaft of the safety screw, with regard to the axial direction, may be positioned in a predefined distance to the axial end face of the flange or collar. Hence, it is simply visible through the opening of the flange when the safety screw assumes the locking position. Thereby, correct and complete attachment of the safety screw can easily be checked. Further, if the flange or collar of the locking screw is provided with the optional tool interface, the tool for rotating the locking screw may be provided with a guide part that protrudes into the central opening of the flange. Thus, when the safety screw assumes the locking position, engagement of the tool with the tool interface may be prevented. Thereby, unintended loosening of the locking screw can efficiently be prevented.

According to some embodiments, the locking assembly may comprise a cover including a cover plate for abutment against a surface of the flange and a pillar protruding from the plate, the pillar having a first engagement structure formed thereon in a predefined axial distance of the cover plate, wherein the shaft of the safety screw includes a second engagement structure formed complementary to the first engagement structure of the cover, and wherein the axial distance is dimensioned such that the first and the second engagement structures are engageable only when the cover plate abuts the surface of the flange and the safety screw is in the locking position. The first and second engagement structures may, for example, be formed as complementary clips and recesses. By dimensioning the axial distance in accordance with the position of the engagement structure of the safety screw when the safety screw is in the locking position, a further possibility of checking the correct positioning of the safety screw is provided.

The features described herein for one aspect of the invention are also disclosed for the other aspects of the invention and vice versa.

### BRIEF DESCRIPTION OF THE DRAWIGNS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: shows a perspective view of a locking assembly according to an embodiment of the invention in a disassembled state.
- Fig. 2: shows a schematic cross-sectional view of a wheel attachment system according to an embodiment of the invention in partially assembled state, wherein a wheel rim is omitted;
- Fig. 3: shows a schematic cross-sectional view of the wheel attachment system of Fig. 2 in a fully assembled state, together a wheel rim;
- Fig. 4: shows a schematic cross-sectional view of the wheel attachment system of Fig. 2 in a partly assembled state with a safety screw being in a fully introduced or locking position, together with a tool, wherein the wheel rim is omitted;
- Fig. 5: shows a schematic cross-sectional view of a wheel attachment system according to a further embodiment of the invention in fully assembled state, wherein a wheel rim is omitted;
- Fig. 6: shows a flow diagram of a method for attaching a wheel rim to a wheel hub of a vehicle according to an embodiment of the invention.

In the figures like reference signs denote like elements unless stated otherwise.

### DETAILED DESCRIPTION OF THE DRAWINGS

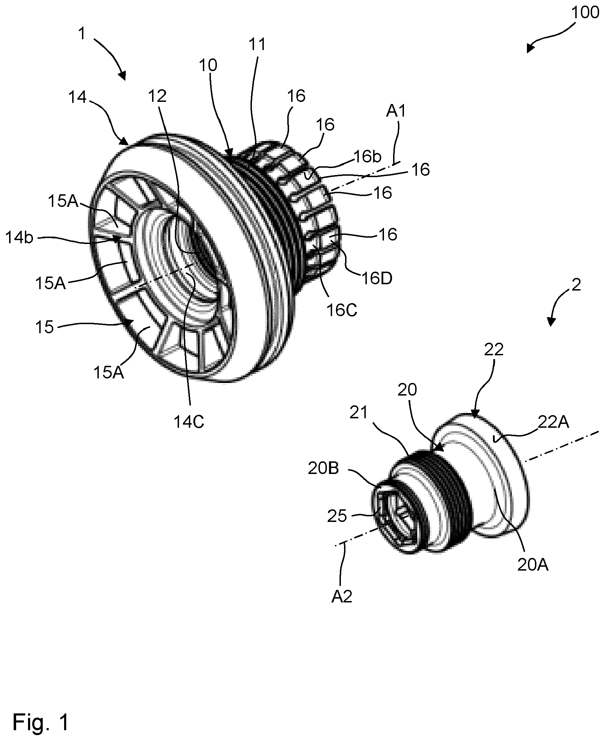

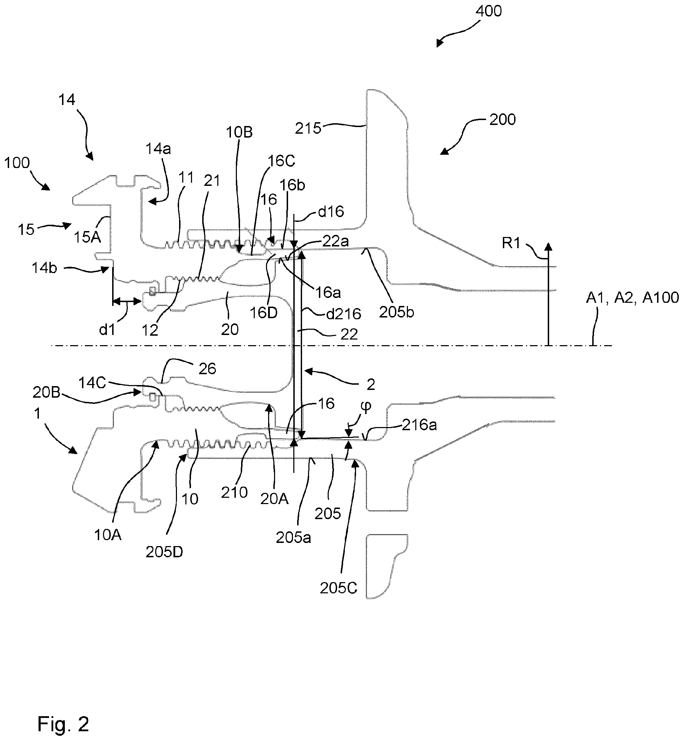

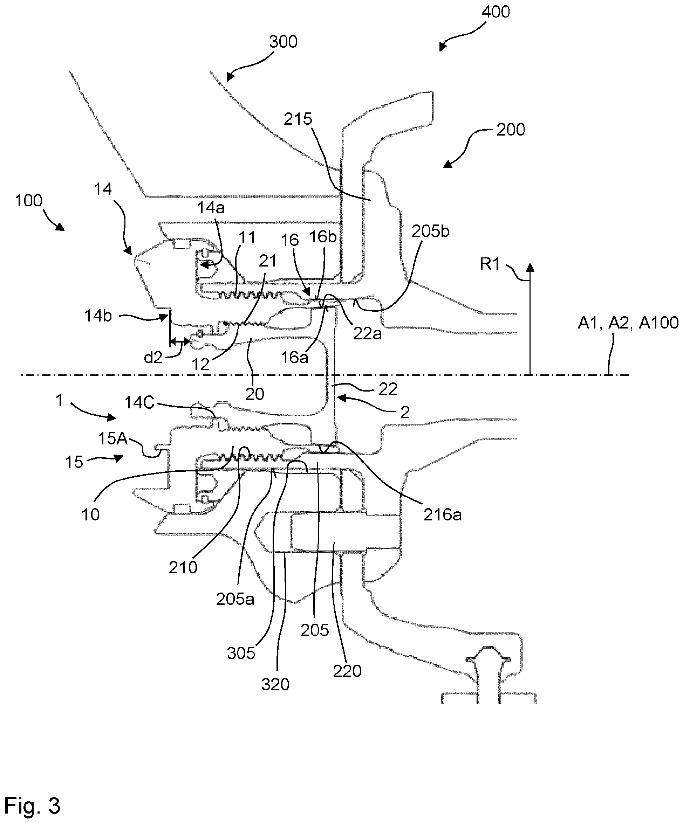

Fig. 1 schematically shows a locking assembly 100 for securing a wheel rim 300 to a wheel hub 200 of a vehicle in a perspective, exploded view. Fig. 2 shows a cross-sectional view of a wheel attachment system 400 that includes the locking assembly 100 and a wheel hub 200, wherein the system 400 is shown in a partly assembled state and the wheel rim 300 is omitted in Fig. 2. Fig. 3 shows the wheel attachment system of Fig. 2 together with the wheel rim in a fully assembled state.

As exemplarily shown in Fig. 1, the locking assembly 100 includes a locking screw 1 and a safety screw 2. The locking screw 1 includes a sleeve body 10, a flange or collar 14, and a plurality of clamping jaws 16.

As shown in Figs. 1 and 2, the sleeve body 10 may be realized as a hollow cylindrical part that has an inner circumferential surface limiting an inner space of the sleeve body 10, and an outer circumferential surface oriented opposite to the inner circumferential surface. A first screw longitudinal axis A1 may be defined by a middle axis surrounded or defined by the inner circumferential surface of the sleeve body 10. A first screw radial direction extends transverse or perpendicular to the first screw longitudinal axis. As shown in Figs. 1 and 2, the sleeve body 10 extends along the first screw axis A1 between a first end 10A and an opposite second end 10B and includes an external thread 11 formed at the outer circumferential surface of the sleeve body 10. The external thread 11 of the sleeve body 10, for example, may be a trapezoidal thread. Further, the sleeve body 10 comprises an internal thread 12 formed at the inner circumferential surface of the sleeve body 10. The internal thread 12 of the sleeve body 10, for example, may be an ISO metric screw thread. Optionally, the external thread 11 and the internal thread 12 of the sleeve body 10 of the locking screw 1 are counter-rotating. For example, the external thread 11 may be a right-hand rotating thread, and the internal thread 12 may be a left-hand rotating thread.

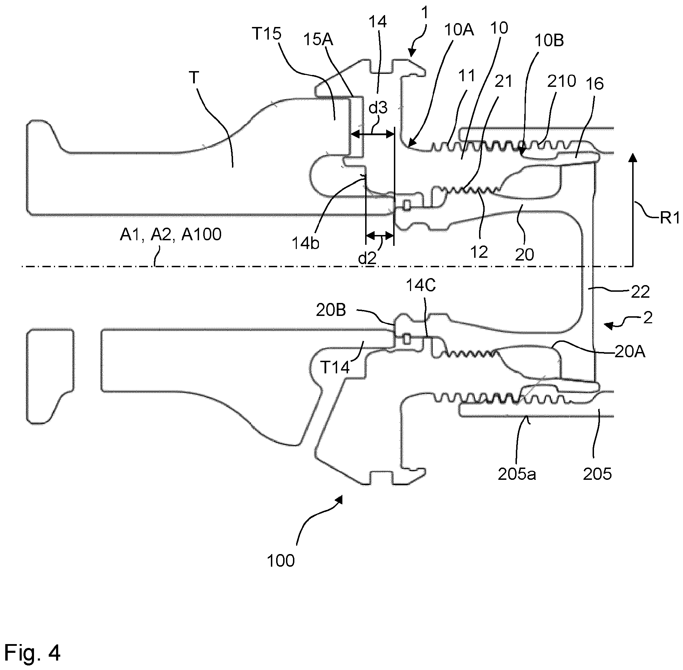

As visible best in Fig. 1, the flange 14, for example, may be realized as a plate or disk shaped part, an outer circumference of which, for example, may be circular as shown in Fig. 1. As shown in Fig. 2, the flange 14 may comprise a first axial end face 14a facing towards the second end 10B of the sleeve body 10, and a second axial end face 14b oriented opposite to the first axial end face 14a. The flange 14, at the second axial end face 14b, optionally may include a tool interface 15 configured to engage with a tool T for rotating the locking screw 1. As exemplarily shown in Fig. 1, the tool interface 15, for example, may include a plurality of pockets 15A formed in the second axial end face 14b of the flange 14. In said pockets, complementary shaped engagement pins T15 may be introduced, as can be understood from Fig. 4. As shown in Fig. 1, the pockets 15A may be arranged spaced or neighbored to oneanother along the circumference of the flange 14.

The flange 14 optionally may also include a central opening 14C that forms a passage into the interior space of the sleeve body 10, as visible in Figs. 1 and 2. The central opening 14C, for example, may be a circular through hole or bore as shown Fig. 1.

As shown in Figs. 1 and 2, the collar or flange 14 is positioned at the first end of the sleeve body 10 and, in particular, may be integrally formed with the sleeve body 10 or being fixed thereto in a different way.

The plurality of clamping jaws 16 are realized as members that at least partially are elastically deformable. For example, each clamping jaw 16 may include a clamping body 16D and an elastically deformable web or connection body 16C that has a smaller thickness than the clamping body 16D, as shown in Fig. 2. The clamping jaws 16, as shown in Figs. 1 and 2 are formed at the second end 10B of the sleeve body 10. As shown in Figs. 1 and 2, the connection body 16C may interconnect the clamping body 16D and the sleeve body 10. For example, the jaws 16 and the sleeve body 10 may be integrally formed. The jaws 16, in particular, may be arranged adjacent but spaced to oneanother along the circumference of the sleeve body 10. For example, adjacent jaws 16 may be separated by a gap or slit as shown in Fig. 1.

As visible best in Fig. 2, each jaw 16 includes a radially inner surface 16a facing towards the first screw longitudinal axis A1 and a radially outer surface 16b that is oriented opposite to the radially inner surface 16a. The radially inner surface 16a of each jaw 16 may be substantially planar. Optionally, the radially inner surface 16a of each jaw 16 may be conical or extend inclined relative to the first screw longitudinal axis A1, as exemplarily shown in Fig 2. In particular, the radially inner surface 16a of each jaw 16 may be conical or extend inclined relative to the first screw longitudinal axis A1 such that it approaches the first screw longitudinal axis A1 when comparing a first position of the radially inner surface 16a with a second position of the radially inner surface 16a closer to the sleeve body 10 than the first position. The radially outer surface 16b, for example, may be substantially planar or conical as shown in Figs. 1 and 2. When the radially outer surfaces 16b are conical, as exemplarily shown in Fig. 2, they may define a maximum or greatest outer diameter d16 in the radial direction. As visible best in Fig. 2, the radially inner and outer surfaces 16a, 16b, preferably, are provided on the clamping body 16D of each jaw 16. As the clamping jaws 16 at least partially are elastically deformable, the clamping jaws 16 can be bent or spread outwards with respect to the first screw radial direction. For example, by applying a radial force to the clamping body 16D, the connection body 16C may be elastically deformable such that the clamping body 16D is enabled to move outwards in the radial direction.

The safety screw 2, as exemplarily shown in Fig. 1, comprises a shaft 20, an external thread 21, and a head 22. Optionally, the safety screw 2 may further include a tool interface 25.

As shown in Figs. 1 and 2, the shaft 20 of the safety screw 2 may, for example, be realized as a generally cylindrical body. Optionally, the shaft 20 may be realized as a hollow shaft as shown in Figs. 1 and 2. Generally, the shaft 20 defines a second screw longitudinal axis A2 and extends along said axis A2 between a first end 20A and an opposite second end. A second screw radial direction extends transverse or perpendicular to the second screw longitudinal axis A2.

The external thread 21 of the safety screw 2 is formed on an outer circumferential surface of the shaft 20 and configured for being engaged with or screwed into the internal thread 12 of the locking screw 1, as shown in Fig. 2. The external thread 21, thus, may also be formed as an ISO metric screw thread, for example. As shown in Fig. 2, the external thread 21 may be formed in a region closer to the second end 20B than to the first end 20A of the shaft.

The head 22 of the safety screw 2 is formed on the first end 20A of the shaft 20 and may, for example, be formed as a substantially circular collar protruding in the second screw radial direction from the outer circumferential surface of the shaft 20, as exemplarily shown in Figs. 1 and 2. As further shown in Figs. 1 and 2, the head 22 includes a radially outer surface 22a facing away from the second screw longitudinal axis A2. As visible best in Fig. 2, the radially outer surface 22a may, optionally, be conical or inclined relative to the second screw longitudinal axis A2. In particular, the radially outer surface 22a of the head 22 may extend inclined relative to the second screw longitudinal axis A2 such that it approaches the second screw longitudinal axis A2 when comparing a first position of the radially outer surface 22a with a second position of the radially inner surface 22a closer to the shaft 20 than the first position.

The optional tool interface 25 is configured to engage with a tool (not shown) for rotating the safety screw 2 and is formed at a second end 20B of the shaft 20. As exemplarily shown in Fig. 1, the tool interface 25 of the shaft 20 may be formed by the axial end region of an inner circumferential surface of the shaft 20 which, for example, may define a hexagon or similar shape.

As visible further in Fig. 2, the safety screw 2 may, optionally, include a second engagement structure 26 which, for example, may be realized as a recess or groove formed in the region of the axial end of the inner circumferential surface of the shaft 20.

The locking assembly 100 shown in Fig. 1 is configured or provided as one single, central securing device for securing a wheel rim 300 (Fig. 3) to a wheel hub 200. The wheel hub 200 is only schematically shown in Fig. 2 and, generally, includes a central hub 205 and a collar 215.

As shown in Fig. 2, the central hub 205 may be formed as a generally cylindrical part having an outer circumferential surface 205a for receiving the wheel rim 300 thereon and an inner circumferential surface 205b oriented opposite to the outer circumferential surface 205a. Further, the central hub 205 extends a longitudinal axis between an inner and 205C and an opposite outer end 205D. As shown in Fig. 2, an internal thread 210 is provided on the inner circumferential surface 205b, in particular, in a region adjacent to the outer end 205D, as schematically shown in Fig. 2. Further, a portion of the inner circumferential surface 205b arranged distanced to the internal thread 210 in the direction towards the inner end 205D forms a contact surface 216a. The contact surface 216a of the central hub 205, for example, may be cylindrical or conical, as exemplarily shown in Fig. 2. In the latter case, a slope of the contact surface may, for example, lie in a range between 1:20 to 1:5. In this case, the contact surface 216a may define a minimum or smallest inner diameter d216.

The collar 215, as shown in Fig. 2, is arranged at the inner end 205C of the central hub 205 and protrudes radially from the outer circumferential surface 205a of the central hub 205.

As shown in Fig. 2, the safety screw 2, with its external thread 21, can be engaged with or screwed into the internal thread 12 of the sleeve body 10 of the locking screw 1. In this case, the first and second screw longitudinal axes A1, A2 are collinear or coaxial to each other. Further, the locking screw 2, with the external thread 11 of the sleeve body 10 can be engaged with or screwed into the internal thread 210 of the wheel hub 200. Thus, the internal thread 210 of the wheel hub 200 may, for example, also be realized as a trapezoidal thread. Further, as visible in Fig. 2, a middle axis or rotational axis of the wheel hub as well as the first and second screw longitudinal axes A1, A2 are collinear or coaxial to each other. In the following, therefore, only an axial or longitudinal direction or central axis A100 will be referred to. A radial direction R1 is transverse or perpendicular to the central axis A100.

Fig. 2 shows the locking assembly 100 in a partly assembled state on a wheel hub 200. In this state, the radially outer surfaces 16b of the jaws 16, with respect to the longitudinal direction A100, are arranged spaced to the contact surface 216a of the wheel hub 210. The safety screw 2, with respect to the longitudinal direction A100, may positioned in a pre-assembled position such that, in the radial direction R1, a gap is formed between the radially outer surface 22a of the head 22 and the radially inner surfaces 16a of the jaws 16. Further, in the pre-assembled position, the safety screw 2, with the second end 20B of the shaft 20, may protrude through the central opening 14C of the flange, i.e. by a predefined first length so that the second end 20B is positioned in a first distance d1 to the second end face 14b of the flange 14.

In order to rigidly attach the locking screw 1 to the wheel hub 200, the locking screw 1, with the external thread 11 of the sleeve body 10, is further screwed into the internal thread 210 of the wheel hub 200 until the radially outer surfaces 16b of the jaws 16, with respect to the longitudinal or axial direction A100 partially or fully overlap with the contact surface 216a of the wheel hub 200, as shown in Fig. 3. For example, with respect to the axial direction A100, an overlap between the outer surfaces 16b of the jaws 16 and the contact surface 216a may lie in the range between 0.05 mm and 3 mm. Moreover, the radially outer surfaces 16b of the jaws 16 may become in frictional contact with the contact surface 216a of the wheel hub 200 to achieve a friction fit and, optionally, a form fit. Further, the safety screw 2, with its external thread 21, is screwed into the internal thread 12 of the sleeve body 10 of the locking screw 1 to a locking position, as shown in Fig. 3. In said locking position, the radially outer surface 22a of the head 22 of the safety screw 2 contacts the radially inner surface 16a. Since at least one of the radially inner surfaces 16a of the jaws 16 and the radially outer surface 22a of the head 22 of the safety screw 2 is conical or inclined with respect to the axial direction A100, moving the head 22 relative to the jaws by screwing the safety screw 2 further into the internal thread 12 of the sleeve body 10 causes the jaws 16 to be spread or pushed outwards in the radial direction R1. Thereby, a clamping force is generated between the jaws 16 and the contact surface 216a of the hub 200. Thus, a friction fit is achieved or the friction force is further increase. Optionally, if the contact surface 216a is conical, a form fit may be achieved additionally. In particular, when the radially outer surfaces 16b and the contact surface 216a of the wheel hub 200, as mentioned above, are conical, the greatest outer diameter d16 defined by the radially outer surfaces 16b of the clamping jaws 16 may be greater than the smallest inner diameter d216 defined by the contact surface 216a of the wheel hub 200. Thus, the jaws 16, even with the safety screw 2 not being in the locking position, are elastically preloaded and a form fit in the axial direction A100 is achieved. It should be mentioned that, also in the case that the contact surface 216a and/or the radially outer surfaces 16b of the jaws 16 are not conical, the outer diameter d16 defined by the radially outer surfaces 16b of the clamping jaws 16 may be greater than the inner diameter d216 defined by the contact surface 216a of the wheel hub 200. For example, due to the positioning the safety screw 2 in the locking position, a torque required for loosening the locking screw 1 may be increased by at least 70 Nm. As is further shown in Fig. 3, the shaft 20 of the safety screw 2 may protrude into the central opening 14C of the locking screw 1 by a predefined second length so that so that the second end 20B is positioned in a second distance d2 to the second end face 14b of the flange 14, said second distance d2 being smaller than the first distance d1.

As shown in Fig. 3, to attach a wheel rim 300 to the wheel hub 200, rim 300 may be arranged at the central hub 205 such that the central hub 205 protrudes through a central opening 305 of the rim 300. The rim 300, at least with regard to the axial direction A100, is fixed or clamped with regard to the axial direction A100 between the flange 14, i.e. the first end face 14a of the flange 14, and the collar 215 of the wheel hub 200. Optionally, the wheel hub 200 may be provided with multiple studs 220 axially protruding from the collar 215 that extend into corresponding receiving holes 320 of the rim 300, as exemplarily shown in Fig. 3.

Fig. 4 shows the locking assembly 100 in the partially assembled state again, however, the safety screw 2 is positioned in the locking position, that is, it protrudes through the central opening 14C of the flange 14 by the second length. Thus, the second end 20B is positioned in the second distance d2 to the second end face 14b of the flange 14. The tool T for rotating the locking screw 1 may include a centering body T14 configured to be introduced into the opening 14C of the flange 14. As shown in Fig. 4, the centering body T14 and the engagement pins T15 of the tool T may be dimensioned such that, when the safety screw 2 is positioned in the locking position, the centering body T14 rests against the second end 20B of the shaft 20 of the safety screw 2 and the centering pins 15 are prevented from being fully engaged with the pockets 15A, as schematically shown in Fig. 3. Thereby, unintended securing or loosening of the locking screw 1, which could damage the hub 200 and/or the locking screw 1, can be prevented, when the safety screw 2 is positioned in the locking position.

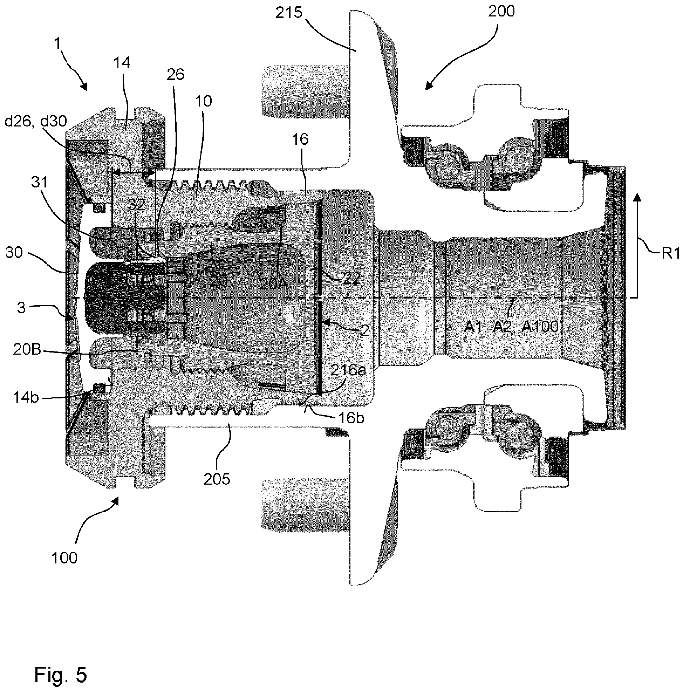

Fig. 5 shows the locking assembly 100 and the wheel hub 200, again, in a fully assembled state, i.e. with the safety screw 2 being positioned in the locking position. As exemplarily shown in Fig. 5, the optional cover 3 may include a cover plate 30 and a pillar 31. The cover plate 30 may be disk shaped. The pillar 31 protrudes from the plate 30 and includes a first engagement structure 32 which may, for example, be realized as a protrusion provided at an end of the pillar 30 opposite to the cover plate 30. Generally, the first engagement structure 32 is positioned on the pillar 31 in a predefined axial distance d30 of the cover plate 30. As shown in Fig. 5, the axial distance d30 may be dimensioned such that the first engagement structures 32 of the pillar 31 and the second engagement structure 26 of the shaft 20 of the safety screw 2 are positioned at substantially the same axial position when the safety screw 2 is in the locking position and when the cover plate 30 abuts or rests against the second axial end face 14b of the flange 14. Thus, the first and second engagement structures 32, 26, preferably, are only engageable when the cover plate 30 abuts the surface 14b of the flange 14 and when the safety screw 2 is in the locking position.

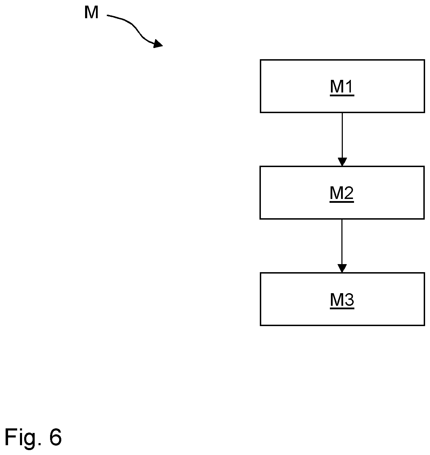

Fig. 6 schematically shows a flow diagram of a method M for attaching a wheel rim 300 to a wheel hub 200 of a vehicle. The method M, by way of example only and without limitation, will be explained by referring to the wheel attachment system 400 discussed above.

As shown in Fig. 6, in a first step, the wheel rim 300 is positioned on the outer circumferential surface 205a of the central hub 205 of the wheel hub 200 such that the central hub 205 protrudes through the receiving opening 305 of the wheel rim 300.

In step M2, the locking screw 1 is threadingly engaged with or screwed into the inner thread 210 of the central hub 205, so that the wheel rim 300 is clamped between the flange 14 of the locking screw 1 the collar 215 of the wheel hub 200. Moreover, by screwing the locking screw 1 into the inner thread 210 of the central hub 205 in step M2, the clamping jaws 16, i.e. the radially outer surfaces 16a of the jaws 16 come into frictional contact with the contact surface 216a of the wheel hub 210. During step M2, the safety screw 2, for example, may already be engaged with the locking screw 1 via the external thread 21 of the safety screw 2 and the internal thread 12 of the locking screw 1, as shown in Fig. 2. For example, the safety screw 2, with respect to the axial direction A100, may be positioned in the pre-assembled position.

In step M3, the safety screw 2 is further screwed into the internal thread 12 of the locking screw 1, e.g. until it assumes the locking position. That is, in step M2, the head 22 of the safety screw 2 is moved into contact with the radially inner surfaces 16a of the jaws 16, and the jaws 16 are spread outwards in the radial direction R) to generate a clamping force between the clamping jaws 16 and the contact surface 216a of the wheel hub 200. For example, a clamping force of at least 80 kN may be achieved.

Before engaging the locking screw 1 with the wheel hub 200 and the safety screw 2 with the locking screw, the threads 11, 12, 21 may be treated with a lubricant.

The locking screw 1 and/or the safety screw 2, generally, may be manufacture from steel, aluminum, or a similar metal material. Optionally, the surfaces of the locking screw 1 and/or the safety screw 2 may be coated with a chemical nickel coating. Generally, the surfaces of the locking screw 1 and/or the safety screw 2 may have a surface hardness of at least 680 HV.

Although specific embodiments have been illustrated and described herein, it will be appreciated by those of at least ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

## Claims

1. A locking assembly (100) for securing a wheel rim (300) to a wheel hub (200) of a vehicle, comprising:
a locking screw (1) including a sleeve body (10) that has an external thread (11) for engaging with an internal thread (210) of the wheel hub (200) and an internal thread (12), a flange (14) formed at a first end (10A) of the sleeve body (10) for abutment against the wheel rim (300) with respect to an axial direction (A100), and a plurality of clamping jaws (16) formed at a second end (10B) of the sleeve body (10) and arranged spaced to each other along a circumference of the sleeve body (10), each jaw (16) being elastically deformable in a radial direction (R1) and having a radially inner surface (16a) and a radially outer surface (16b) for contacting a contact surface (216a) of the wheel hub (200); and
a safety screw (2) including a shaft (20) that has an external thread (21) for engaging with the internal thread (12) of the sleeve body (10) of the locking screw (1), and a head (22) provided at a first end (20A) of the shaft (20), the head (22) having a radially outer surface (22a) for contacting the radially inner surfaces (16a) of the jaws (16);
wherein at least one of the radially inner surfaces (16a) of the jaws (16) and the radially outer surface (22a) of the head (22) of the safety screw (2) is conical, so that the jaws (16) are spread outwards in the radial direction (R1), when the shaft (20) of the safety screw (2) with its external thread (21) is screwed into the internal thread (12) of the sleeve body (10) of the locking screw (1).

2. The locking assembly (100) according to claim 1, wherein the flange (14) of the locking screw (1) includes a tool interface (15) configured to engage with a tool (T) for rotating the locking screw (1).

3. The locking assembly (100) according to claim 2, wherein the tool interface (15) includes a plurality of pockets (15A) formed at an axial end face (14b) of the flange (14).

4. The locking assembly (100) according to any one of the preceding claims, wherein the external thread (11) and the internal thread (12) of the sleeve body (10) of the locking screw (1) are counter-rotating.

5. The locking assembly (100) according to any one of the preceding claims, wherein the external thread (11) of the sleeve body (10) of the locking screw (1) is a trapezoidal thread.

6. The locking assembly (100) according to any one of the preceding claims, wherein the internal thread (12) of the sleeve body (10) of the locking screw (1) is an ISO metric screw thread.

7. The locking assembly (100) according to any one of the preceding claims, wherein the shaft (20) of the safety screw (2) is formed as a hollow shaft.

8. The locking assembly (100) according to any one of the preceding claims, wherein the safety screw (2) includes a tool interface (25) configured to engage with a tool for rotating the safety screw (2), and wherein the tool interface (25) is formed at a second end (20B) of the shaft (20).

9. The locking assembly (100) according to any one of the preceding claims, wherein the flange (14) of the locking screw (1) includes a central opening (14C) forming a passage into the sleeve body (10), wherein the safety screw (2), with its external thread (21), is screwable into the internal thread (12) of the sleeve body (10) of the locking screw (1) to a locking position in which the jaws (16) are spread outwards in the radial direction (R1) and in which the shaft (20) of the safety screw (2) protrudes into the central opening (14C) of the locking screw (1) by a predefined length.

10. The locking assembly (100) according to claim 9, further comprising:
a cover (3) including a cover plate (30) for abutment against a surface (14b) of the flange (14) and a pillar (31) protruding from the plate (30), the pillar (31) having a first engagement structure (32) formed thereon in a predefined axial distance (d30) of the cover plate (30);
wherein the shaft (20) of the safety screw (2) includes a second engagement structure (26) formed complementary to the first engagement structure (32) of the cover (3); and
wherein the axial distance (d30) is dimensioned such that the first and the second engagement structures (32, 26) are engageable only when the cover plate (30) abuts the surface (14b) of the flange (14) and the safety screw (2) is in the locking position.

11. A wheel attachment system (400), comprising:
a wheel hub (200) comprising a central hub (205), which has an outer circumferential surface (205a) for receiving a wheel rim (300) thereon and an inner circumferential surface (205b) provided with an internal thread (210), and a collar (215) protruding radially from the outer circumferential surface (205a) of the central hub (205); and
a locking assembly (100) according to any one of the preceding claims;
wherein the inner circumferential surface (205b), with a portion arranged distanced to the internal thread (210), forms a contact surface (216a) of the wheel hub (200);
wherein the locking screw (1), with the external thread (11) of the sleeve body (10), is screwable into the internal thread (210) of the central hub (205) so that the clamping jaws (16) are in frictional contact with the contact surface (216a) of the wheel hub (200); and
wherein the safety screw (2), with the external thread (21) of the shaft (20), is screwable into the internal thread (12) of the sleeve body (10) of the locking screw (1) so that the clamping jaws (16) are spread radially outwards against the contact surface (216a) of the wheel hub (200) to generate a predefined clamping force between the clamping jaws (16) and the contact surface (216a) of the wheel hub (200).

12. The wheel attachment system (400) according to claim 11, wherein the radially outer surfaces (16b) of the clamping jaws (16) and the contact surface (216a) of the wheel hub (200) are conical, and wherein a greatest outer diameter (d16) defined by the radially outer surfaces (16b) of the clamping jaws (16) is greater than a smallest inner diameter (d216) defined by the contact surface (216a) of the wheel hub (200).

13. A method (M) for attaching a wheel rim (300) to a wheel hub (200) of a vehicle, in particular using of the wheel attachment system (400) of claim 11 or 12, the method (M) comprising:
positioning (M1) the wheel rim (300) on an outer circumferential surface (205a) of a central hub (205) of the wheel hub (200) such that the central hub (205) protrudes through a receiving opening (305) of the wheel rim (300);
screwing (M2) a locking screw (1) into an inner thread (210) provided on an inner surface (205b) of the central hub (205), wherein the wheel rim (300) is clamped between a flange (14) of the locking screw (1) and a collar (215) radially protruding from the outer circumferential surface (205a) of the central hub (205), and wherein a plurality of clamping jaws (16) provided on an axial end (10A) of the locking screw (1) come into frictional contact with a contact surface (216a) of the wheel hub (210), said contact surface (216a) being formed by a portion of the inner circumferential surface (205b) of the central hub (205) distanced to the internal thread (210); and
screwing (M3) a safety screw (2) into an internal thread (12) of the locking screw (1), wherein a head (22) of the safety screw (2) is moved into contact with radially inner surfaces (16a) of the jaws (16), and the jaws (16) are spread outwards in the radial direction (R1) to generate a clamping force between the clamping jaws (16) and the contact surface (216a) of the wheel hub (200).
